# EUROPÄISCHE PATENTANMELDUNG

(11) **EP 1 336 976 A2**
(43) Veröffentlichungstag der Anmeldung: **20.08.2003**
(21) Anmeldenummer: 03001600.0
(22) Anmeldetag: 24.01.2003
(51) Int. Cl.: H01H 3/16, B64F 1/305

(54) **Kontaktschuh**

(30) Priorität: 14.02.2002 DE 20202197 U
(71) Anmelder: HÜBNER GmbH, 34123 Kassel (DE)
(72) Erfinder: Mazur, Markus, 34131 Kassel (DE)
(74) Vertreter: Walther, Robert, Dipl.-Ing.

(57) **Zusammenfassung**

Gegenstand der Erfindung ist ein Kontaktschuh (1) als Sicherungseinrichtung zur Anordnung zwischen einer Flugzeugtür und einer Zugangsvorrichtung zu einem Flugzeug, z. B. einer Fluggastbrücke, umfassend eine deformierbare Hülle (2) mit einer im Inneren der Hülle angeordneten Schaltereinrichtung (10), die bei Deformation der Hülle (2) des Kontaktschuhes (1) betätigbar ist, wobei die Schaltereinrichtung (10) mindestens zwei einander gegensinnig betätigbare Schalter (41, 42 bzw. 43, 44) aufweist, wobei ein Schaltschlitten (30) vorgesehen ist, wobei der Schaltschlitten (30) mit einem Scherengestell (20) derart in Verbindung steht, dass bei Zusammendrücken des Scherengestelles (20) durch die Hülle (2) des Kontaktschuhes (1) der Schaltschlitten (30) verschieblich ist, wobei bei Verschiebung des Schaltschlittens (30) der mindestens eine Schalter (41, 42 bzw. 43, 44) entlastet und der andere Schalter (41, 42 bzw. 43, 44) belastet wird.

## Beschreibung

Die Erfindung betrifft einen Kontaktschuh als Sicherungseinrichtung zur Anordnung zwischen einer Flugzeugtür und einer Zugangsvorrichtung zu einem Flugzeug, z. B. einer Fluggastbrücke, umfassend eine deformierbare Hülle mit einer im Inneren der Hülle angeordneten Schaltereinrichtung, die bei Deformation der Hülle des Kontaktschuhes betätigbar ist, wobei die Schaltereinrichtung mindestens zwei einander gegensinnig betätigbare Schalter aufweist.

Zugangsvorrichtungen für Flugzeuge sind insbesondere Fluggastbrücken, Fluggasttreppen oder Hubtische von Liefer- und Servicefahrzeugen. Diese Zugangsvorrichtungen liegen als Übergänge an dem Flugzeugrumpf unterhalb der Flugzeugtüröffnung unter der Flugzeugtür an. Es ist nun durchaus nicht unüblich, das Flugzeug zu betanken, während eine solche Zugangsvorrichtung in Kontakt mit dem Flugzeugrumpf steht. Beim Betanken wird auch aufgrund der Gewichtszunahme des Flugzeugs sich das Flugzeug absenken. Es ist daher bekannt, entsprechend auch die Zugangsvorrichtung, z. B. eine Fluggastbrücke, abzusenken, um einerseits eine Beschädigung des Flugzeugs bzw. auch der Zugangsvorrichtung zu vermeiden und andererseits eine Spaltbildung zwischen Flugzeugrumpf und Zugangsvorrichtung zu vermeiden; denn ein solcher Spalt stellt eine potentielle Gefahrenquelle für das Bedienungspersonal dar. Um eine derartige Spaltbildung bzw. auch eine Beschädigung des Flugzeuges zu vermeiden bzw. eine ist ein sogenannter Kontaktschuh als Sicherungseinrichtung vorgesehen, der zwischen der Zugangsvorrichtung einerseits und der Flugzeugtür andererseits eingesetzt wird. Das bedeutet, dass dann, wenn sich das Flugzeug absenkt, und z. B. Fluggastbrücke bzw. die Zugangsvorrichtung eine derartige Bewegung nicht mitmacht, der Kontaktschuh zusammengedrückt wird, und aufgrund von einer in dem Kontaktschuh angeordneten Schaltereinrichtung ein entsprechender Impuls an die Steuerung der Zugangsvorrichtung übermittelt wird, mit der Folge, dass sich die Zugangsvorrichtung in gleicher Weise absenkt, wie das Flugzeug.

Es hat sich jedoch herausgestellt, dass die bekannten Kontaktschuhe nicht zuverlässig arbeiten. Ein Grund hierfür sind defekte Schalter der Schaltereinrichtung oder auch Verschmutzungen der Schalter, die den Schaltvorgang blockieren. Grundsätzlich ist auch davon auszugehen, dass das Belasten von Schaltern zur Erzeugung eines Impulses funktionssicherer ist, als die Verwendung von Schaltern, die bei Entlastung den entsprechenden Schaltimpuls abgeben.

Aus dem Gebrauchsmuster 200 159 71.2 ist ein Kontaktschuh der eingangs genannten Art bekannt, der relativ kompliziert in Bezug auf seinen mechanischen Aufbau und damit anfällig ist.

Der Erfindung liegt daher die Aufgabe zugrunde, einen Kontaktschuh der eingangs genannten Art bereitzustellen, der sich durch eine hohe Zuverlässigkeit auszeichnet und damit einhergehend eine hohe Sicherheit für das Arbeitspersonal bei der Wartung des Flugzeuges gewährleistet und der dennoch relativ preiswert in der Herstellung ist.

Die Aufgabe wird erfindungsgemäß dadurch gelöst, dass ein Schaltschlitten vorgesehen ist, wobei der Schaltschlitten mit einem Scherengestell derart in Verbindung steht, dass bei Zusammendrücken des Scherengestelles durch die Hülle des Kontaktschuhes der Schaltschlitten verschieblich ist, wobei bei Verschiebung des Schaltschlittens der mindestens eine Schalter der Schaltereinrichtung entlastet und der andere Schalter belastet wird. Bei Deformation der Hülle des Kontaktschuhes wird hierdurch das unmittelbar unter der Hülle angeordnete Scherengestell zusammengedrückt, mit der Folge, dass der mit dem Scherengestell verbundene Schaltschlitten verschoben wird. Durch die Verschiebung des Schaltschlittens wird der eine Schalter, der im Ausgangszustand durch den Schaltschlitten belastet wird, entlastet, wobei im zusammengedrückten Zustand des Scherengestells durch den Schaltschlitten der andere gegenüberliegende Schalter belastet wird. Es handelt sich hierbei um sogenannte gegensinnig betätigbare Schalter. Hierunter sind solche Schalter zu verstehen, die auf Druck bzw. bei Entlastung einen entsprechenden Schaltimpuls abgeben. Das heißt, bei gegensinnig betätigbaren Schaltern handelt es sich um Druck- und Entlastungsschalter. Durch die Verwendung derart gegensinnig betätigbarer Schalter wird in beide Richtungen ein sicheres Öffnen der Schalter und ein sicheres Schließen der Schalter bewirkt, statt ausschließlich eines sicheren Öffnens oder Schließens der Schalter, wie nach dem Stand der Technik. Das bedeutet, dass bei einer eventuellen Fehlfunktion des Schalters die Fluggastbrücke nicht abgesenkt wird, was zur Folge hat, dass sich zwischen Flugzeugrumpf und Treppe zumindest der zu eingangs erwähnte Spalt nicht bilden kann, mit der Folge, dass das Bedienpersonal nicht gefährdet ist.

Weitere vorteilhafte Merkmale sind den Unteransprüchen zu entnehmen.

So umfasst das Scherengestell im Einzelnen zwei parallele Scheren mit jeweils zwei Scherenarmen. Eine derartige Anordnung von zwei parallelen Scheren hat den Vorteil, dass bei einseitiger Belastung der Hülle des Kontaktschuhes die Gefahr des Verkantens des durch das Scherengestell geführten Schaltschlittens minimiert ist.

Nach einem besonderen Merkmal der Erfindung ist das Scherengestell federbelastet ausgebildet; hieraus wird deutlich, dass die Belastung des Scherengestelles entgegen der Kraft einer Feder erfolgt, so dass nach Entlastung sich aufgrund der Federkraft das Scherengestell selbstständig wieder aufrichtet.

Die Schaltereinrichtung umfasst im Einzelnen eine Schalterbrücke mit zu beiden Seiten der Schalterbrücke angeordneten mindestens jeweils einem, vorzugsweise jedoch jeweils zweier Schalter. Zur Betätigung der Schalter zeigt der Schaltschlitten zu beiden Seiten der Schalterbrücke ein Schaltschild. Dieses Schaltschild besitzt eine große Fläche, so dass in jedem Fall sichergestellt ist, dass die Schalter durch den Schaltschlitten, der durch die Schalterbrücke geführt ist, betätigt werden.

Nach einem weiteren, vorteilhaften Merkmal weisen die Scheren an ihrem oberen der Hülle zugewandten Ende jeweils eine Rolle auf. Hieraus wird deutlich, dass bei Deformation der Hülle des Kontaktschuhes die Scherenarme mit ihrem oberen Ende an der Hüllenwandung entlanggleiten können, was eine erhöhte Sicherheit bei der Betätigung des Kontaktschuhes bewirkt, da die Reibungsverluste zwangsweise geringer sind.

Wie bereits an anderer Stelle ausgeführt, sind insgesamt jeweils vier Schalter vorgesehen. Diese vier Schalter der Schaltereinrichtung sind im Einzelnen derart gestaltet, dass zwei Schalter bei Belastung (Druckschalter) und zwei Schalter bei Entlastung (Entlastungsschalter) einen Schaltimpuls abgeben. Das heißt, die Schaltereinrichtung weist neben zwei Druckschaltern auch zwei Entlastungsschalter auf.

Um die Deformation der Hülle des Kontaktschuhes zu begünstigen, weist die Hülle des Kontaktschuhes bzw. der Kontaktschuh eine Entlüftung auf, die in einem geschützten Raum mündet, um eine Verschmutzung der Entlüftungsöffnung zu vermeiden.

Zur besseren Montage ist vorgesehen, dass die Schaltereinrichtung als gesonderte Einheit aus dem Kontaktschuh ausbaubar ist. Hierzu ist die Schaltereinrichtung auf einer Trägerplatte angeordnet, wobei die Trägerplatte lösbar mit dem Boden des Kontaktschuhes verbunden ist.

Nach einem weiteren, vorteilhaften Merkmal der Erfindung ist vorgesehen, dass der innere Abstand der Schaltschilde zueinander größer ist, als der Abstand zwischen den zu beiden Seiten der Schalterbrücke angeordneten Schaltern. Hierdurch wird erreicht, dass bei Entlastung der auf der einen Seite der Schalterbrücke angeordneten Schalter nicht unmittelbar sofort eine Belastung der gegenüberliegenden Schalter durch den Schaltschlitten erfolgt. Mithin bildet die Größe des Abstandes zwischen den beiden Schaltschilden des Schaltschlittens ein Maß dafür, wie "ruhig" der Kontaktschuh arbeitet. Denn es wird immer so sein, dass die Zugangsbrücke zu dem Flugzeug eine gewisse Schwingungsbewegung relativ zu dem Flugzeug ausführt bzw. umgekehrt. Derartige Bewegungen sind normal und müssen von dem Kontaktschuh auch toleriert werden. Insofern ist ein Maß für die Toleranz von Bewegungen zwischen Fluggastbrücke einerseits und Flugzeug andererseits der Abstand zwischen den beiden Schilden in Bezug auf die Breite der Schalterbrücke bzw. der äußere Abstand der zu beiden Seiten der Schalterbrücke angebrachten Schalter.

Anhand der Zeichnungen wird die Erfindung nachstehend beispielhaft näher erläutert.
- Fig. 1: zeigt eine perspektivische Darstellung des Kontaktschuhes;
- Fig. 2: zeigt die Trägerplatte mit der Schaltereinrichtung, die als gesondertes Bauteil mit dem Boden der Hülle des Kontaktschuhes verbunden werden kann;
- Fig. 3 - 7: zeigen die verschiedenen Stellungen des Scherengestells bzw. des damit verbundenen Schlittens in Bezug auf die Aktivierung bzw. Deaktivierung der Schalter;
- Fig. 8: zeigt schematisch die Anordnung eines Kontaktschuhes zwischen dem Boden einer Fluggastbrücke einerseits und Tür des Flugzeuges andererseits.

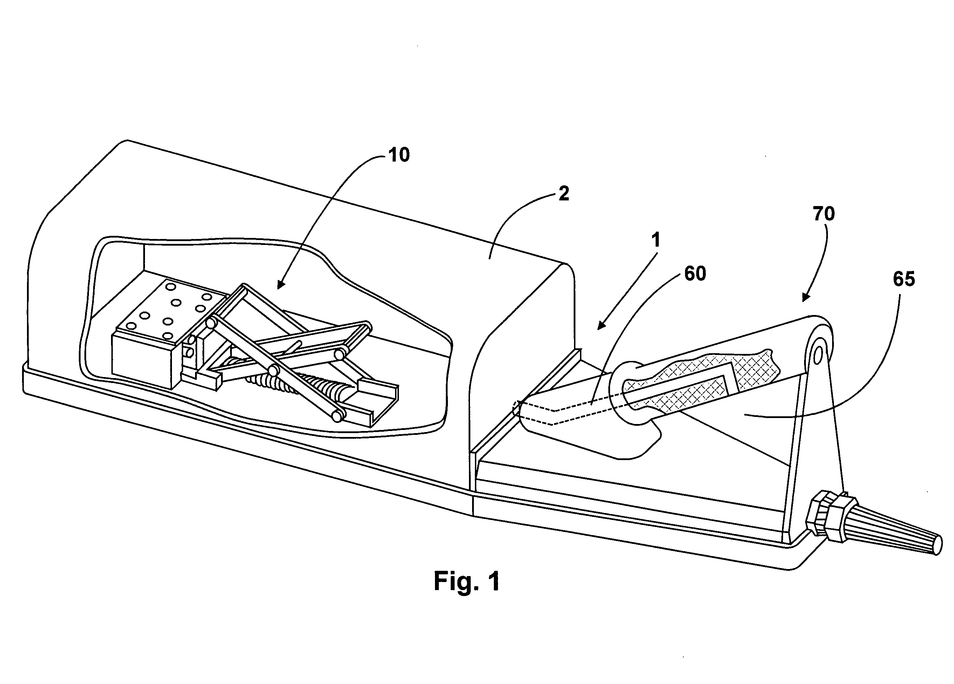

Gemäß der Fig. 1 weist der insgesamt mit 1 bezeichnete Kontaktschuh eine deformierbare Hülle 2 auf, in dessen Inneren die insgesamt mit 10 bezeichnete Schaltereinrichtung untergebracht ist.

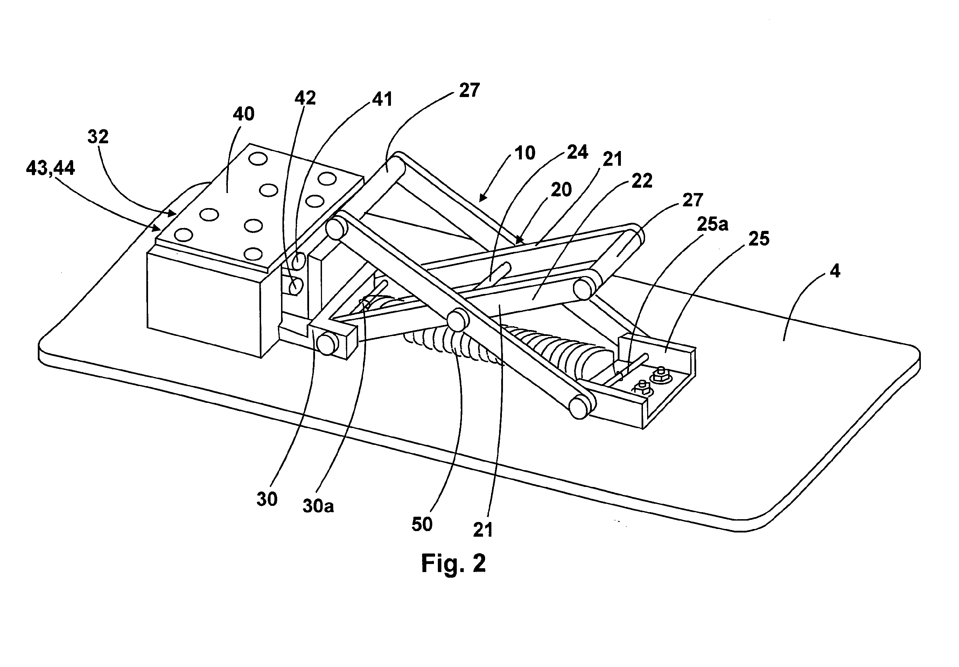

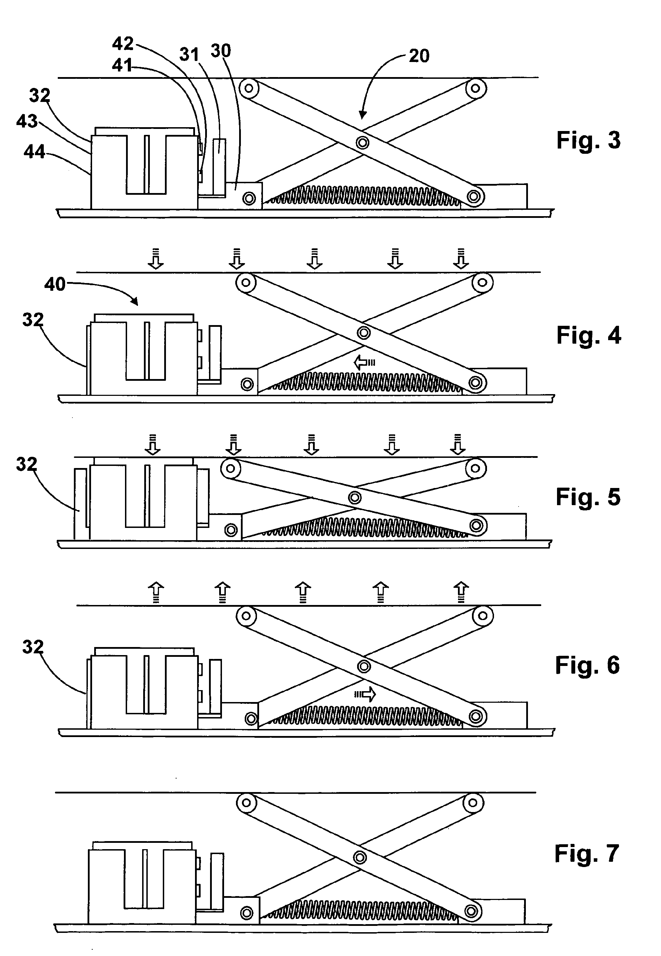

Die Schaltereinrichtung 10 lagert auf einer Trägerplatte 4 (Fig. 2), die als gesonderte Einheit mit dem Boden der Hülle 2 des Kontaktschuhes 1 verbindbar ist. Insofern wird deutlich, dass durch diese Ausgestaltung der Trägerplatte eine einfache Montage bzw. Demontage des Kontaktschuhes bzw. der Schaltereinrichtung ermöglicht wird. Die insgesamt mit 10 bezeichnete Schaltereinrichtung umfasst das mit 20 bezeichnete Scherengestell mit dem Schaltschlitten 30 und der Schalterbrücke 40. Das Scherengestell 20 besitzt zwei parallele Scheren 21 mit jeweils zwei Scherenarmen 22. Die Scherenarme 22 sind durch eine mittige Achse 24 untereinander verbunden. Zwei in gleicher Richtung verlaufende Scherenarme 22 sind an ihrem unteren Ende auf der Trägerplatte durch einen Lagerbock 25 verdrehbar gehalten. Hierzu weist der Lagerbock 25 eine Achse 25a auf. Am gegenüberliegenden Ende sind die beiden anderen Scherenarme 22 an dem Schlitten 30 durch wiederum eine Achse 30a angelenkt. Der Schaltschlitten 30 ist verschieblich in der Schalterbrücke 40 gelagert und besitzt zwei Schaltschilde 31 und 32 (siehe Fig. 3 - 7). Die Schaltbrücke 40 wiederum zeigt auf ihrer einen Seite die beiden Schalter 41, 42 bzw. 43, 44 an der gegenüberliegenden Seite der Schaltbrücke 40. Zwischen der Achse 25a und der Achse 30 ist eine Zugfeder 50 gespannt, die das Scherengestell 20 nach Entlastung der Hülle des Kontaktschuhes wieder aufrichtet.

Jeweils zwei parallel zueinander verlaufende Scherenarme sind an ihren oberen Enden mit Rollen 27 versehen, die dafür sorgen, dass ohne nennenswerte Reibungsverluste das Scherengestell 20 zusammengedrückt werden kann, da die Rollen an der inneren Wandung der Hülse entlanggleiten.

Die Funktionsweise des Kontaktschuhes, insbesondere im Hinblick auf die Betätigung der Schalter 41, 42 und 43, 44 durch die Schaltschilde des Schaltschlittens ergibt sich aus den Fig. 3 bis 7. In der Ausgangsstellung bzw. Ruhestellung, wie in Fig. 3 dargestellt, sind die Schalter 43 und 44 belastet, wohingegen die Schalter 41, 42 entlastet sind. Hierbei bleibt der Signalgeber inaktiv. Bei Druck von oben auf den Kontaktschuh bzw. auf die deformierbare Hülle wird der Schlitten 30 in Richtung der Schaltbrücke 40 verschoben (Fig. 4), so dass die Schalter 43, 44 durch das Schild 32 entlastet werden, hingegen die Schalter 41, 42 noch nicht belastet sind. Hieraus wird deutlich, dass erst ab einem bestimmten Verformungsweg der Hülle des Kontaktschuhes das Schild 31 mit den Schaltern 41, 42 in Kontakt tritt. Das heißt, dass der Kontaktschuh eine gewisse Toleranz an Verformung erlaubt, ohne dass irgendwelche Schaltvorgänge ausgelöst werden. Bei der Darstellung gemäß Fig. 5 sind nun die Schalter 41, 42 belastet. Die Steuerung der Fluggastbrücke bekommt nunmehr das Signal sich zu senken. Bei Absenken der Fluggastbrücke lässt nunmehr der Druck auf die deformierbare Hülle des Kontaktschuhes nach (Fig. 6). Das Scherengestell wird entlastet und der Schaltschlitten wird aufgrund der Feder 50 zwischen dem Lagerbock 25 und dem Schlitten 30 nach oben aufgestellt. Hierbei werden die Schalter 41, 42 entlastet, und in Endstellung gemäß Fig. 7 die Schalter 43 und 44 wieder belastet. Die Bewegung der Fluggastbrücke ist nunmehr gestoppt. Auch beim Absenken der Fluggastbrücke werden Schwingungen toleriert, so dass nicht ständig ein Signal an die Steuerung erfolgt, wenn sich nur kleine Relativbewegungen zwischen Flugzeug und Fluggastbrücke ergeben.

Der durch die Hülle gebildete Hohlraum muss entlüftet werden, damit schlussendlich eine Deformation der Hülle erfolgen kann. Die Entlüftung erfolgt durch eine Entlüftungsbohrung 60 im Griff 70 und mündet in dem geschützten Raum 65.

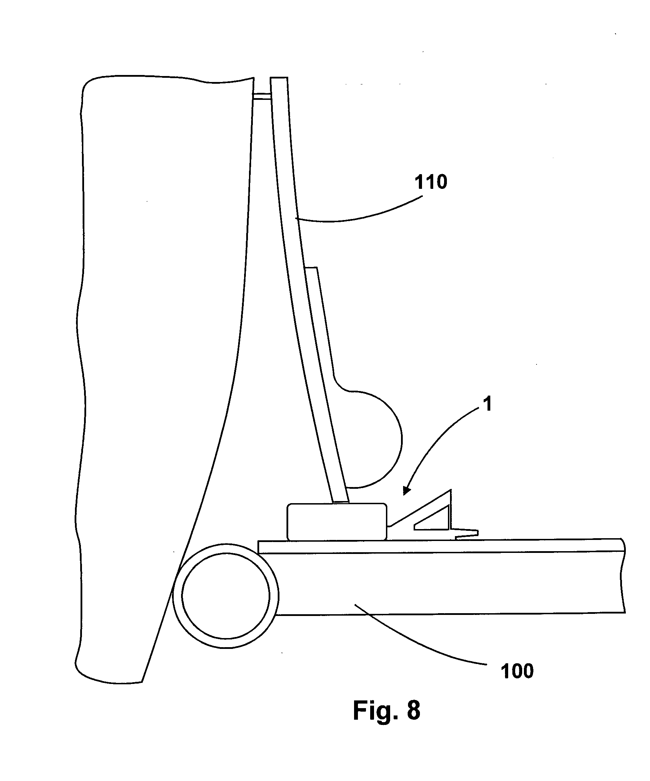

Die Anordnung des Kontaktschuhes 1 auf der Fluggastbrücke 100 unter der Tür 110 des Flugzeuges 120 ergibt sich aus der Fig. 8.

Hieraus wird deutlich, dass dann, wenn sich der Flugzeugrumpf absenkt, auch die Brücke 100 abgesenkt werden muss, da ansonsten die Gefahr besteht, dass die Tür 110 des Flugzeuges abreißt.

## Patentansprüche

1. Kontaktschuh (1) als Sicherungseinrichtung zur Anordnung zwischen einer Flugzeugtür und einer Zugangsvorrichtung zu einem Flugzeug, z. B. einer Fluggastbrücke, umfassend eine deformierbare Hülle (2) mit einer im Inneren der Hülle angeordneten Schaltereinrichtung (10), die bei Deformation der Hülle (2) des Kontaktschuhes (1) betätigbar ist, wobei die Schaltereinrichtung (10) mindestens zwei einander gegensinnig betätigbare Schalter (41, 42 bzw. 43, 44) aufweist,
**dadurch gekennzeichnet,**
**dass** ein Schaltschlitten (30) vorgesehen ist, wobei der Schaltschlitten (30) mit einem Scherengestell (20) derart in Verbindung steht, dass bei Zusammendrücken des Scherengestelles (20) durch die Hülle (2) des Kontaktschuhes (1) der Schaltschlitten (30) verschieblich ist, wobei bei Verschiebung des Schaltschlittens (30) der mindestens eine Schalter (41, 42 bzw. 43, 44) entlastet und der andere Schalter (41, 42 bzw. 43, 44) belastet wird.

2. Kontaktschuh nach Anspruch 1,
**dadurch gekennzeichnet,**
**dass** das Scherengestell (20) zwei parallele Scheren (21) mit jeweils zwei Scherenarmen (22) umfasst.

3. Kontaktschuh nach Anspruch 2,
**dadurch gekennzeichnet,**
**dass** das Scherengestell (20) federbelastet (50) ausgebildet ist.

4. Kontaktschuh nach Anspruch 1,
**dadurch gekennzeichnet,**
**dass** die Schaltereinrichtung (10) eine Schalterbrücke (40) mit zu beiden Seiten der Schalterbrücke (40) angeordneten, mindestens jeweils einen Schalter (41, 42 bzw. 43, 44) umfasst.

5. Kontaktschuh nach Anspruch 4,
**dadurch gekennzeichnet,**
**dass** der Schaltschlitten (30) zu beiden Seiten der Schalterbrücke (40) einen Schaltschild (31, 32) zur Betätigung des jeweiligen Schalters (41, 42 bzw. 43, 44) aufweist.

6. Kontaktschuh nach Anspruch 4,
**dadurch gekennzeichnet,**
**dass** der Schaltschlitten (30) durch die Schalterbrücke (40) verschieblich geführt ist.

7. Kontaktschuh nach Anspruch 2,
**dadurch gekennzeichnet,**
**dass** die Scherenarme (22) an ihrem oberen, der Hülle (2) zugewandten Ende eine Rolle (27) aufweisen.

8. Kontaktschuh nach Anspruch 1,
**dadurch gekennzeichnet,**
**dass** insgesamt vier Schalter (41, 42 bzw. 43, 44) für die Schaltereinrichtung (10) vorgesehen sind, wobei zwei Schalter (41, 42 bzw. 43, 44) bei Belastung und zwei Schalter bei Entlastung einen Schaltimpuls geben.

9. Kontaktschuh nach Anspruch 8,
**dadurch gekennzeichnet,**
**dass** die Schaltereinrichtung (10) neben zwei Druckschaltern (41, 43) zwei Entlastungsschalter (42, 44) aufweist.

10. Kontaktschuh nach Anspruch 1,
**dadurch gekennzeichnet,**
**dass** der Kontaktschuh (1) eine Entlüftung (60) aufweist, die in einem geschützten Raum (65) mündet.

11. Kontaktschuh nach Anspruch 1,
**dadurch gekennzeichnet,**
**dass** die Schaltereinrichtung (10) als gesonderte Einheit aus dem Kontaktschuh (1) ausbaubar ist.

12. Kontaktschuh nach Anspruch 11,
**dadurch gekennzeichnet,**
**dass** die Schaltereinrichtung (10) auf einer Trägerplatte (4) angeordnet ist, wobei die Trägerplatte (4) lösbar mit dem Boden des Kontaktschuhes (1) verbunden ist.

13. Kontaktschuh nach einem der voranstehenden Ansprüche,
**dadurch gekennzeichnet,**
**dass** der innere Abstand der Schaltschilde (31, 32) zueinander größer ist, als der Abstand zweier zu beiden Seiten der Schalterbrücke (40) angeordneter Schalter (41, 42 bzw. 43, 44).
